# EUROPÄISCHE PATENTSCHRIFT

(11) **EP 1 632 341 B1**
(45) Veröffentlichungstag und Bekanntmachung des Hinweises auf die Patenterteilung: **27.06.2007**
(21) Anmeldenummer: 04020759.9
(22) Anmeldetag: 01.09.2004
(51) Int. Cl.: B32B 17/06, B32B 13/04, E04F 13/14, E04B 1/64

(54) **Schützende Beschichtung und Verfahren zu deren Herstellung**
Protective coating and method of its manufacture
Couche de protection et procédé de sa realisation

(43) Veröffentlichungstag der Anmeldung: 08.03.2006
(73) Patentinhaber: MC-Bauchemie Müller GmbH & Co. Chemische Fabriken, 46238 Bottrop (DE); Schott AG, 55122 Mainz (DE)
(72) Erfinder:
(74) Vertreter: Zenz, Joachim Klaus

(56) Entgegenhaltungen:
- EP-A- 0 790 370
- DE-A1- 19 948 121
- DE-C- 560 320
- US-A- 2 842 840
- US-A- 2 927 869
- US-A- 4 603 525

## Beschreibung

Die Erfindung betrifft eine schützende Beschichtung für einen mechanisch stabilen, insbesondere mineralischen und/oder metallischen Untergrund sowie ein Verfahren zum Herstellen einer solchen Beschichtung.

Es ist im Stand der Technik bekannt, Oberflächen von Bauwerken, beispielsweise Betonoberflächen oder Oberflächen von Stahlbetonbauteilen im Wand-, Decken- und Bodenbereich abwassertechnischer Anlagen, mit Beschichtungen zu versehen, die die Säure- und Alkalibeständigkeit verbessern und eine hohe mechanische Festigkeit aufweisen. Die zu solchen Beschichtungen verwendeten Baustoffmischungen werden beispielsweise aus einer Alkalisilikat-Bindemittelkomponente und einer Pulverkomponente hergestellt, wobei die Pulverkomponente als wesentliche Bestandteile latent-hydraulische Stoffe und Siliziumdioxid enthält. Die DE 199 48 121 A1 offenbart beispielsweise einen Verbund aus Betonkörper und Glaskörper, wobei zwischen diesen eine einen vernetzten Siliconkautschuk enthaltende Beschichtung angeordnet ist, die für eine Verklebung der beiden Schichten sorgt. Auch die EP 0 790 370 A1 beschreibt einen Verbund bzw. ein Bauelement zur Verkleidung von Oberflächen. Dieses Bauelement besteht aus einer Glasscheibe und einer Verbundmörtelschicht, wobei die Verbundmörtelschicht spezielle Verbindungen ausweist, unter anderem ein Polyacrylsäurederivat.

Darüber hinaus ist es im Stand der Technik bekannt, vorgeformte dicke und starre Elemente aus Glas mit Hilfe von Kunststoffklebern oder kunststoffmodifizierten Zementklebern auf Betonoberflächen aufzukleben. Derartig belegte Betonoberflächen weisen ebenso wie mit Fliesen belegte Oberflächen Fugen auf, so daß die Beständigkeit und Dichtheit einer derartigen Baustoffbeschichtung primär von den Fugeneigenschaften bestimmt wird. Darüber hinaus ist die Haftung der aufgeklebten Glaselemente auf dem Untergrund zum Teil nicht ausreichend, denn der Haftverbund Glas/Kleber/Untergrund wird lediglich von Adhäsionskräften bestimmt, da keine chemischen Verbindungen zwischen Glas und Kleber und Kleber und Untergrund gebildet werden. Schließlich erfordert die Anwendung des Kunststoffklebers oder des kunststoffmodifizierten Klebers eine Trockenheit des Untergrunds von weniger als 4% Feuchte. Dies ist häufig nur mit sehr hohem Aufwand realisierbar.

Aus DE 560 320 ist es ferner ein Verfahren zur Herstellung eines Glasüberzuges auf Bodenbelagplatten bekannt. Bei diesem wird ein Gemisch eines Natriumsilicats und eines Metalloxids auf die Platten aufgestrichen und diese anschließend mit dem Glas belegt. Wesentlich bei diesem Verfahren ist eine Erwärmung der Platten auf etwa 100°C.

Aufgabe der Erfindung ist es, eine Baustoff-Beschichtung für einen mechanisch stabilen Untergrund sowie ein Verfahren zu deren Herstellung zu schaffen, die bzw. das ein hohes Maß an Chemikalienbeständigkeit, insbesondere an Säure- und Alkalibeständigkeit aufweist und einfach herzustellen ist.

Diese Aufgabe wird erfindungsgemäß durch ein Verfahren zum Herstellen einer schützenden Beschichtung auf einem mechanisch stabilen, insbesondere mineralischen und/oder metallischen Untergrund mit den Merkmalen des Patentanspruchs 1 bzw. eine schützende Beschichtung mit den Merkmalen des Patentanspruchs 19 gelöst.

Erfindungsgemäß werden ein anorganischer Polysilikat-Kohäsionsklebstoff und ein Glasfolienmaterial mit einer Dicke kleiner 2 mm, vorzugsweise 0,3 mm bereitgestellt. Dann wird der Polysilikat-Kohäsionsklebstoff auf den zu beschichtenden Untergrund und/oder eine Seite des Glasfolienmaterials aufgebracht. Das Glasfolienmaterial wird danach, jedoch vor dem Aushärten des Polysilikat-Kohäsionsklebstoffes, dem zu beschichtenden Untergrund derart aufgelegt, daß das Glasfolienmaterial den Polysilikat-Kohäsionsklebstoff abdeckt, und danach wird der Polysilikat-Kohäsionsklebstoff unter Verbinden des Glasfolienmaterials mit dem zu beschichtenden Untergrund aushärten gelassen.

Unter einem mineralischen Untergrund soll hier ein bei Bauwerken üblicher Untergrund verstanden werden, der Beton, Mauerwerk, mineralische Baumaterialien aller Art, Steine, Glas und ähnliches enthält, wobei die Oberfläche teilweise auch metallischer Art sein kann, beispielweise dann, wenn Stahlelemente Teile der Oberfläche bilden (beispielsweise bei StahlBeton-Untergründen). Unter einem metallischen Untergrund soll hier ein Untergrund verstanden werden, auf dem - insbesondere auf Grund einer sich auf dem Metall bildenden oxidischen/hydroxidischen Schicht - der Polysilikat-Kohäsionsklebstoff durch Kohäsion haftet, d.h. chemische Bindungen eingeht.

Die Erfindung geht von der Grunderkenntnis aus, daß Glasfolien der angegebenen Dicke derart flexibel bzw. biegsam sind, daß ein Belegen auch gekrümmter Untergründe möglich ist. Darüber hinaus schmiegen sich derart dünne Glasfolien gut an einen mit dem Polysilikat-Kohäsionsklebstoff beschichteten Untergrund an, so daß sowohl ein Kontakt zwischen dem Untergrund und dem Polysilikat-Kohäsionsklebstoff als auch ein Kontakt zwischen dem Klebstoff und der Glasschicht hergestellt wird. Wesentlich ist ferner, daß der Polysilikat-Kohäsionsklebstoff sowohl mit dem mineralischen Untergrund als auch mit dem Glasbelag chemische Bindungen eingeht, so daß ein mechanisch nahezu untrennbares "silikatisch-monolithisches" Verbundsystem entsteht. Dieses Verbundsystem aus Untergrund, Polysilikat-Kohäsionsklebstoff und Glas ist zudem hoch temperaturbeständig, da kein organischer Klebstoff verwendet wird. Die aus dem Glas gebildete Oberfläche bietet die für Glas typische hohe Chemikalien-, insbesondere Säure- und Alkalibeständigkeit. Die Dichtheit der schützenden Beschichtung gegenüber angreifenden Medien übersteigt das mit bekannter Beschichtungssystem erreichbare Maß. Die Oberfläche der Beschichtung weist alle Vorteile von Glasoberflächen auf; sie ist aseptisch und eluationsfrei. Zudem wurde festgestellt, daß das Verbundsystem auch eine sehr starke Haftung auf metallischen Untergründen (Stahl z.B.) aufweist. Der Polysilikat-Klebstoff, als "Haftvermittler" zwischen Stahl und Glasschicht, wirkt zusätzlich passivierend auf den Stahl und baut Spannungen zwischen Glas und Stahl ab.

Die schützende Beschichtung hat zudem den Vorteil, daß sie einfach zu reparieren ist, wozu dieselben Komponenten wie bei ihrer Herstellung verwendet werden: nach Reinigung der Oberfläche wird der Polysilikat-Kohäsionsklebstoff auf die zu reparierende Fläche und/oder auf die eine Seite des flexiblen Glasfolienmaterials aufgebracht, und anschließend wird das flexible Glasfolienmaterial aufgelegt.

Vorzugsweise wird der Polysilikat-Kohäsionsklebstoff auf dem zu beschichtenden Untergrund und/oder der einen Seite des Glasfolienmaterials in gleichmäßiger Verteilung aufgebracht. Der Auftrag des Polysilikat-Kohäsionsklebstoffs kann dabei in parallelen Streifen oder in einem Punkt- oder Streifenraster erfolgen; unter Umständen laufen die Klebstoffstreifen, - raupen oder -punkte in die benachbarten Klebstoffbereiche aus und bilden eine wesentlich geschlossene Klebstoffschicht, wenn das Glasfolienmaterial aufgelegt, aufgestrichen und/oder angedrückt wird.

In bevorzugter Weiterbildung ist vorgesehen, daß der zu beschichtende Untergrund und/oder die eine Seite des Glasfolienmaterials ganzflächig mit dem Polysilikat-Kohäsionsklebstoff beschichtet wird, bevor das Glasfolienmaterial dem zu beschichtenden Untergrund aufgelegt wird.

Das Aufbringen des Polysilikat-Kohäsionsklebstoffes auf eine Seite des Glasfolienmaterials kann dann von Vorteil sein, wenn das Glasfolienmaterial mechanisiert, beispielsweise unter Abzug von einer Materialrolle, aufgelegt werden soll und unmittelbar vor dem Auflegen mit dem flüssigen oder pastösen Polysilikat-Kohäsionsklebstoff versehen wird.

Aufgrund ihrer geringen Dicke können die Glasfolien als einander überlappende Bahnen oder Platten verlegt werden, wie dies bei einer bevorzugten Ausführungsform vorgesehen ist. Bei der bevorzugten Ausführung überlappen sich die Glasfolien-Bahnen oder -Platten in einem schmalen Bereich einer Breite zwischen 0,3 cm und 7 cm, vorzugsweise zwischen 2 und 5 cm. Im Überlappungsbereich werden die Glasfolien-Bahnen oder -Platten entweder miteinander (z.B. autogen oder mit Hilfe eines Glaslots) verschweißt oder es wird wiederum eine Polysilikat-Kohäsionsklebstoffschicht zwischen den einander überlappenden Glasfolienabschnitten aufgebracht. Dadurch entsteht eine im wesentlich einheitliche, aufgrund ihrer Fugenlosigkeit sehr dichte, glatte und chemikalienbeständige Glasoberfläche, die leicht zu reinigen und zu desinfizieren ist. Die zu schützenden Oberflächen können nach dem Aufbringen der erfindungsgemäßen schützenden Beschichtung bereits nach wenigen Stunden wieder den Betriebs- oder Umgebungsbedingungen ausgesetzt werden, d.h. belastet werden, da keine Fugen vorhanden sind und das Glas den darunterliegenden Polysilikat-Kohäsionsklebstoff stützt, so daß dieser anschließend "in Ruhe" vollständig aushärten kann.

Überraschenderweise hat sich gezeigt, daß das Glas durch das entstehende monolithische Verbundsystem Glas/Polysilikat/Untergrund trotz seiner geringen Dicke mechanisch hoch belastbar ist. Es wurde nämlich gefunden, daß das Glas bei extremer mechanischer Druck- oder Schlag-Beanspruchung Risse zeigt, die sich in der Kontaktzone Polysilikat/Glas (d.h. an der Unterseite der Glasschicht) bilden, aber die Glasoberfläche nicht erreichen. Überraschenderweise wurde ein Selbstheilungsprozeß des Glases im Verbund mit dem Polysilikat-Kohäsionsklebstoff bei derartiger Beschädigung des Glases entdeckt: Risse auf der Unterseite des Glases heilen. Dies beruht vermutlich auf einer erhöhten Kriechneigung des Polysilikat-Kohäsionsklebstoffs derart, daß Spannungen im Glas wieder abgebaut werden.

Gegenüber herkömmlichen Kunststoffbeschichtungen hat die erfindungsgemäße Beschichtung ferner den Vorteil, daß bei bodenseitig anstehendem Wasserdruck Fehlstellen sich nicht durch "kalten Fluß" zu Beulen auswachsen können. Das Glas kriecht nicht, bleibt an einer "Fehlstelle" unverformt und schält sich nicht ab.

Vorzugweise wird ein anorganischer Polysilikat-Kohäsionsklebstoff bereitgestellt, indem eine Alkalisilikat-Bindemittelkomponente mit einer siliziumdioxidhaltigen, alumosilikatischen Pulverkomponente unter Anwesenheit von Wasser vermischt wird, so daß eine pastöse oder flüssige Masse entsteht. Vorzugsweise weist die Pulverkomponente zwischen 5 und 50 Gew.-% wenigstens einer puzzolanischen oder latent-hydraulischen Komponente und zwischen 10 und 40 Gew.-% wenigstens einer aktivierten Siliziumdioxidkomponente auf. Als puzzolanische oder latent-hydraulische Komponenten können beispielsweise Flugasche, Elektrofilterasche, natürliche Puzzolane, Trass, gebrannter Ölschiefer und/oder gemahlene Hochofenschlacke (Hüttensand) verwendet werden. Als Siliziumdioxidkomponente können beispielsweise pyrogene Kieselsäure, Fällungskieselsäure, Silicastaub, Glasmehl und/oder Flug- oder Elektrofilterasche mit hohem Siliziumdioxidanteil verwendet werden. Bei Verwendung einer Flugasche bildet diese in der Regel sowohl Anteile der puzzolanischen Komponente als auch Anteile der Siliziumdioxidkomponente.

Die Pulverkomponente kann bei einer Ausführungsform zusätzlich zwischen 5 und 30 Gew.-% wenigstens einer aktivierten Aluminiumoxykomponente enthalten, wobei die aktivierte Aluminiumoxykomponente vorzugsweise ein Aluminiumoxid, -hydroxid und/oder -silikat enthält.

Bei einer bevorzugten Weiterbildung enthält die Pulverkomponente zusätzlich 1 bis 10 Gew.-% eines hydraulischen Bindemittels, vorzugsweise Tonerdezement.

Die Alkalisilikat-Bindemittelkomponente ist vorzugsweise eine wäßrige Alkalisilikatlösung (beispielsweise Natronwasserglas oder Kaliwasserglas), die mit der Pulverkomponente vermischt wird. Vorzugsweise wird eine Alkalisilikatlösung mit einem Feststoffanteil von 40 bis 50 Gew.-% verwendet und wird die Pulverkomponente mit 5 bis 50 Gew.-%, vorzugsweise 10 bis 15 Gew.-%, Alkalisilikatlösung gemischt. Alternativ kann auch eine pulverförmige Alkalisilikat-Bindemittelkomponente bereitgestellt werden, die zunächst mit der Pulverkomponente gemischt wird. Anschließend wird die pastöse oder flüssige Masse hergestellt, indem Wasser zu der Mischung zugemischt wird.

Bei einer Weiterbildung des erfindungsgemäßen Verfahrens besteht das Glasfolienmaterial aus einem Borosilikatglas mit 2 bis 12 %, vorzugsweise mit 5 bis 10 % Boranteil. Dies erhöht die Chemikalienbeständigkeit und die thermische Belastbarkeit.

Die Glasfolien werden beispielsweise mittels eines Float-Prozesses hergestellt. Vorzugsweise werden die Glasfolien mittels eines Zieh-Prozesses derart hergestellt, daß die Glasfolien spannungsarm sind, wobei "spannungsarm" auch Spannungsfreiheit einschließt. Die Oberfläche wird beispielsweise feuerpoliert.

Die erfindungsgemäße Beschichtung ermöglicht verschiedene Arten der Einfärbung der Schichtbestandteile. Zunächst kann die Polysilikat-Klebstoffschicht durch Zugabe von Pigmenten eingefärbt werden, wobei die Eigenfärbung der oben genannten Bestandteile der Pulverkomponente durch Verwendung farbloser oder weißer Bestandteile reduziert werden kann (beispielsweise durch die bevorzugte Zugabe von Aluminiumoxykomponenten). Ferner können die verwendeten Glasfolien eingefärbt werden.

Weitere vorteilhafte und/oder bevorzugte Ausführungsformen sind in den Unteransprüchen gekennzeichnet.

Im folgenden wird die Erfindung anhand einer in der Zeichnung dargestellten bevorzugten Ausführungsform näher erläutert. In der Zeichnung zeigt:

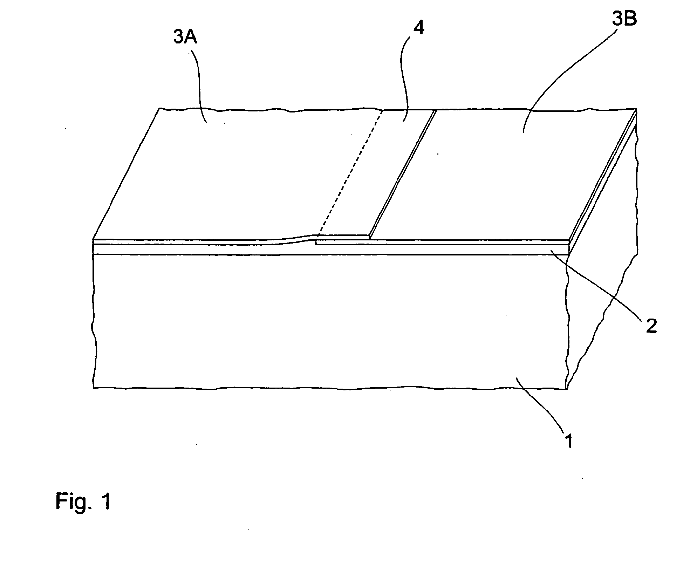

Fig. 1: eine schematische Darstellung des erfindungsgemä-ßen Schichtaufbaus und der Anordnung der aufgelegten Glasfolien-Bahnen oder -Platten.

Fig. 1 zeigt die erfindungsgemäße Beschichtung auf einem mechanisch stabilen, mineralischen und/oder metallischen Untergrund 1. Der Untergrund 1 kann eine beliebige Oberfläche eines Gebäudes sein. Vorzugsweise handelt es sich um eine Oberfläche aus Beton oder Stahlbeton, die einer erhöhten chemischen Beanspruchung ausgesetzt ist. Beispielsweise handelt es sich um die Betonoberfläche oder die Oberfläche von Stahlbetonbauteilen in Wandbereichen und Deckenbereichen abwassertechnischer Anlagen, wie beispielsweise von Faultürmen, Voreindickern, gedeckelten Belebungsbecken, Pumpenschächten und ähnlichem. Eine weitere vorteilhafte Anwendung der erfindungsgemäßen Beschichtung besteht in der Auskleidung von Trinkwasserbehältnissen und -reservoirs. Darüber hinaus sind eine Vielzahl von Anwendungen in der chemischen Industrie denkbar. Die Beschichtung kann auch zum Auskleiden von Kaminen oder Schornsteinen (wet-stack-application) eingesetzt werden, um diese gegen Versottung zu schützen.

Die Oberfläche des Untergrunds 1 wird zunächst mit einer Schicht 2 eines anorganischen Polysilikat-Kohäsionsklebstoffs beschichtet. Vor der Aufbringung des Kohäsionsklebstoffs wird der Untergrund vorbehandelt, d.h. gereinigt und von losen Teilen, Staub, Öl oder sonstigen trennend wirkenden Stoffen befreit. Der anorganische Polysilikat-Kohäsionsklebstoff wird bereitgestellt, indem eine flüssige Alkalisilikat-Bindemittelkomponente mit einer siliziumdioxidhaltigen, alumosilikatischen Pulverkomponente gut durchmischt wird. Die Pulverkomponente enthält zwischen 5 und 50 Gew.-% wenigstens einer puzzolanischen oder latent-hydraulischen Komponente und zwischen 10 und 40 Gew.-% wenigstens einer aktivierten Siliziumdioxidkomponente. Bei den puzzolanischen oder latent-hydraulischen Komponenten handelt es sich insbesondere um Flugasche, Elektrofilterasche, natürlichen Puzzolanen, Trass, gebrannten Ölschiefer und/oder gemahlene Hochofenschlacke (Hüttensand). Die aktivierte Siliziumdioxidkomponente besteht aus pyrogener Kieselsäure, Fällungskieselsäure, Silicastaub, Glasmehl und/oder Flug- oder Elektrofilterasche mit hohem Siliziumdioxidanteil. Die Pulverkomponente kann ferner zwischen 5 und 30 Gew.-% wenigstens einer aktivierten Aluminiumoxykomponente enthalten, wobei dieser Anteil teilweise eine oder mehrere der latent-hydraulischen und puzzolanischen Komponenten ersetzen kann. Als Aluminiumoxykomponenten können beispielsweise kalziniertes Bauxit oder auch die Mineralien Hydrargillit, Gibbsit, Böhmit, Diaspor, Alumogel oder Sporogillit oder sogenannte Aktivtonerden verwendet werden. Vorzugsweise enthält die Pulverkomponente zusätzlich zwischen 1 und 10 Gew.-% eines hydraulischen Bindemittels, insbesondere Tonerdezement. Die Pulverkomponente enthält ferner inerte Bestandteile, wie beispielsweise 40 - 60 Gew.-% Quarzsand, sowie weitere Additive, wie beispielsweise redispergierbare Polymerbindemittel, Schwindreduzierer, Fasern und Pigmente. Beispielsweise kann als Polysilikat-Kohäsionsklebstoff ein säurebeständiges Zweikomponenten-Polymersilikat auf mineralischer Basis, wie es von der Firma MC-Bauchemie angeboten wird, verwendet werden.

Eine bevorzugte Richtrezeptur für die Pulverkomponente des Kohäsionsklebstoffs umfaßt:
- 10 - 30 Gew.-% Flugasche
- 1 - 10 Gew.-% weiterer latent-hydraulischer Stoff
- 10 - 30 Gew.-% pyrogene Kieselsäure
- 1 - 10 Gew.-% Tonerdezement
- 40 - 60 Gew.-% Quarzsand
- 1 - 5 Gew.-% Pigmente
- 1 - 3 Gew.-% Schwindreduzierer
- 1 - 5 Gew.-% redispergierbares Polymerbindemittel
- 0,05 - 2 Gew.-% Fasern.

Als Alkalisilikat-Bindemittelkomponente wird vorzugsweise eine Kaliwasserglaslösung mit einem Feststoffanteil von 40 - 50 % verwendet und mit einem Mol-Verhältnis SiO₂:K₂O von kleiner 2,3 : 1, vorzugsweise zwischen 1,5 : 1 und 0,8 : 1. Die Kaliwasserglaslösung wird der Pulverkomponente unmittelbar vor der Anwendung in einem Anteil zwischen 5 und 30 Gew.-%, vorzugsweise zwischen 12 und 15 Gew.-% zugegeben.

Der bereitgestellte Polysilikat-Kohäsionsklebstoff wird anschließend durch Aufstreichen, Aufrollen oder Aufspritzen auf den Untergrund 1 aufgebracht.

Nach dem Auftragen der Polysilikat-Kohäsionsklebstoffschicht 2 wird diese mit Glasfolien-Bahnen oder -Platten 3A, 3B mit einer Dicke kleiner 2 mm, vorzugsweise kleiner 0,3 mm, derart belegt, daß die Klebstoffschicht vollständig abgedeckt wird und sich die Glasfolien-Bahnen oder -Platten 3A, 3B geringfügig überlappen. Im Überlappungsbereich 4 werden die Glasfolien autogen oder mit Hilfe eines Glaslots verschweißt oder - vorzugsweise - mit Hilfe des Polysilikat-Kohäsionsklebstoffs verklebt. Die dünnen Glasfolien können aus Kalknatronglas, alkalifreien Gläsern oder Glaskeramik bestehen. Vorzugsweise bestehen die Glasfolien aus Borosilikatglas mit einem Boranteil von etwa 5 - 10 %. Beispielsweise können Glasfolien-Bahnen oder -Platten aus Gläsern des Typs D 263 S oder Typs AF 45 der Firma Schott AG verwendet werden.

Die Glasfolien-Bahnen oder -Platten werden nach dem Aufbringen der Polysilikat-Kohäsionsklebstoffschicht vorzugsweise innerhalb einer Verarbeitungszeit von bis zu 40 Minuten aufgelegt.

Die Größe der verwendeten Glasfolien-Bahnen oder -Platten richtet sich primär nach der Dicke der Glasfolien und nach der maximalen Krümmung des Untergrunds sowie danach, ob der Untergrund in einer oder in zwei zueinander senkrechten Richtungen gekrümmt ist. In Bereichen mit komplizierten Krümmungsverhältnissen werden kleinere Glasfolien-Platten verlegt als auf Untergründen, die eben oder nur in einer Richtung gekrümmt sind. Die Abmessungen und die Geometrie der Glasfolien-Platten sind vorzugsweise an die Geometrie der zu beschichtenden Oberfläche des Untergrunds angepaßt. Beispielsweise werden quadratische, rechteckige, dreieckige, streifenförmige und/oder kreissegmentförmige Platten bereitgestellt.

Die Glasfolien-Platten werden vorab zugeschnitten und in einer vorgegebenen Größe geliefert und/oder vor Ort geschnitten.

## Patentansprüche

1. Verfahren zum Herstellen einer schützenden Beschichtung auf einem mechanisch stabilen, insbesondere mineralischen und/oder metallischen Untergrund, wobei:
a) ein anorganischer Polysilikat-Kohäsionsklebstoff bereitgestellt wird,
b) ein Glasfolienmaterial mit einer Dicke kleiner 2 mm, vorzugsweise kleiner 0,3 mm, bereitgestellt wird,
c) der Polysilikat-Kohäsionsklebstoff auf den zu beschichtenden Untergrund und/oder eine Seite des Glasfolienmaterials aufgebracht wird,
d) das Glasfolienmaterial vor dem Aushärten des Polysilikat-Kohäsionsklebstoff dem zu beschichtenden Untergrund derart aufgelegt wird, daß das Glasfolienmaterial den Polysilikat-Kohäsionsklebstoff abdeckt und
e) der Polysilikat-Kohäsionsklebstoff unter Verbinden des Glasfolienmaterials mit dem zu beschichtenden Untergrund aushärtet.

2. Verfahren nach Anspruch 1, daß der Polysilikat-Kohäsionsklebstoff auf dem zu beschichtenden Untergrund und/oder der einen Seite des Glasfolienmaterials in gleichmäßiger Verteilung aufgebracht wird.

3. Verfahren nach Anspruch 2, **dadurch gekennzeichnet, daß** der zu beschichtende Untergrund und/oder die eine Seite des Glasfolienmaterials ganzflächig mit dem Polysilikat-Kohäsionsklebstoff beschichtet wird, bevor das Glasfolienmaterial dem zu beschichtenden Untergrund aufgelegt wird.

4. Verfahren nach einem der Ansprüche 1 bis 3, **dadurch gekennzeichnet, daß** der anorganische Polysilikat-Kohäsionsklebstoff bereitgestellt wird, indem eine Alkalisilikat-Bindemittelkomponente mit einer siliziumdioxidhaltigen, alumosilikatischen Pulverkomponente unter Anwesenheit von Wasser vermischt wird, so daß eine pastöse oder flüssige Masse entsteht.

5. Verfahren nach Anspruch 4, **dadurch gekennzeichnet, daß** die Pulverkomponente zwischen 5 und 50 Gew.-% wenigstens einer puzzolanischen oder latent-hydraulischen Komponente und zwischen 10 und 40 Gew.-% wenigstens einer aktivierten Siliziumdioxidkomponente enthält.

6. Verfahren nach Anspruch 5, **dadurch gekennzeichnet, daß** die wenigstens eine puzzolanische oder latent-hydraulische Komponente aus einer ersten Stoffgruppe ausgewählt ist, die Flugasche, Elektrofilterasche, natürliche Puzzolane, Trass, gebrannten Ölschiefer und gemahlene Hochofenschlacke (Hüttensand) umfaßt, und daß die wenigstens eine aktivierte Siliziumdioxidkomponente aus einer zweiten Stoffgruppe ausgewählt wird, die pyrogene Kieselsäure, Fällungskieselsäure, Silicastaub, Glasmehl und Flug- oder Elektrofilterasche mit hohem Siliziumdioxidanteil umfaßt.

7. Verfahren nach Anspruch 5 oder 6, **dadurch gekennzeichnet, daß** die Pulverkomponente ferner zwischen 5 und 30 Gew.-% wenigstens einer aktivierten Aluminiumoxykomponente enthält.

8. Verfahren nach Anspruch 7, **dadurch gekennzeichnet, daß** die wenigstens eine aktivierte Aluminiumoxykomponente ein Aluminiumoxid, -hydroxid und/oder -silikat enthält.

9. Verfahren nach einem der Ansprüche 5 bis 8, **dadurch gekennzeichnet, daß** die Pulverkomponente zusätzlich 1 - 10 Gew.-% eines hydraulischen Bindemittels, vorzugsweise Tonerdezement, enthält.

10. Verfahren nach einem der Ansprüche 4 bis 9, **dadurch gekennzeichnet, daß** als Alkalisilikat-Bindemittelkomponente eine wäßrige Alkalisilikatlösung bereitgestellt wird, die mit der Pulverkomponente vermischt wird.

11. Verfahren nach Anspruch 10, **dadurch gekennzeichnet, daß** eine Alkalisilikatlösung mit einem Feststoffanteil von 40 bis 50 % verwendet wird und daß die Pulverkomponente mit 5 - 50 Gew.-%, vorzugsweise 10 bis 15 Gew.-%, Alkalisilikatlösung gemischt wird.

12. Verfahren nach einem der Ansprüche 4 bis 9, **dadurch gekennzeichnet, daß** eine pulverförmige Alkalisilikat-Bindemittelkomponente bereitgestellt wird, daß die pulverförmige Alkalisilikat-Bindemittelkomponente mit der Pulverkomponente gemischt wird und daß die pastöse oder flüssige Masse hergestellt wird, indem Wasser zu der Mischung der pulverförmigen Alkalisilikat-Bindemittelkomponente und der Pulverkomponente zugemischt wird.

13. Verfahren nach einem der Ansprüche 4 bis 12, **dadurch gekennzeichnet, daß** eine Pulverkomponente verwendet wird, die 40 bis 60 Gew.-% einer inerten Komponente, die vorzugsweise Quarzsand aufweist, enthält.

14. Verfahren nach einem der Ansprüche 1 bis 13, **dadurch gekennzeichnet, daß** das Glasfolienmaterial in Form von Bahnen oder Platten bereitgestellt wird, die unter gegenseitiger Überlappung aufgelegt werden.

15. Verfahren nach Anspruch 14, **dadurch gekennzeichnet, daß** sich die Glasfolien-Bahnen oder Platten in einem schmalen Bereich einer Breite zwischen 0,3 cm und 7 cm, vorzugsweise 2 bis 5 cm, überlappen.

16. Verfahren nach einem der Ansprüche 1 bis 15, **dadurch gekennzeichnet, daß** das Glasfolienmaterial aus einem Borosilikatglas mit 2 bis 12, vorzugsweise 5 bis 10 % Boranteil besteht.

17. Verfahren nach einem der Ansprüche 1 bis 16, **dadurch gekennzeichnet, daß** das Glasfolienmaterial mittels eines Zieh-prozesses spannungsarm hergestellt wird.

18. Verfahren nach einem der Ansprüche 1 bis 16, **dadurch gekennzeichnet, daß** das Glasfolienmaterial mittels eines Float-Prozesses spannungsarm hergestellt wird.

19. Schützende Beschichtung für einen mechanisch stabilen, insbesondere mineralischen und/oder metallischen Untergrund, aufweisend:
eine mit im wesentlichen gleichmäßiger Verteilung auf dem Untergrund angeordnete anorganische Polysilikat-Kohäsionsklebstoffschicht (2) und
einen auf die Polysilikat-Kohäsionsklebstoffschicht (2) vor deren Aushärtung aufgelegten Belag aus Glasfolienmaterial (3A, 3B) mit einer Dicke kleiner 2 mm, vorzugsweise kleiner als 0,3 mm, der die Polysilikat-Kohäsionsklebstoffschicht (2) abdeckt.

20. Beschichtung nach Anspruch 19, **dadurch gekennzeichnet, daß** die Polysilikat-Kohäsionsklebstoffschicht (2) ganzflächig zwischen Untergrund und Belag aus Glasfolienmaterial angeordnet ist.

21. Beschichtung nach Anspruch 19 oder 20, **dadurch gekennzeichnet, daß** die anorganische Polysilikat-Kohäsionsklebstoffschicht eine Alkalisilikat-Bindemittelkomponente und eine siliziumdioxidhaltige, alumo-silikatische Pulverkomponente enthält.

22. Beschichtung nach Anspruch 21, **dadurch gekennzeichnet, daß** die Pulverkomponente zwischen 5 und 50 Gew.-% wenigstens einer puzzolanischen oder latent-hydraulischen Komponente und zwischen 10 und 40 Gew.-% wenigstens einer aktivierten Siliziumdioxidkomponente enthält.

23. Beschichtung nach Anspruch 22, **dadurch gekennzeichnet, daß** die wenigstens eine puzzolanische oder latent-hydraulische Komponente aus einer ersten Stoffgruppe ausgewählt ist, die Flugasche, natürliche Puzzolane, Trass, gebrannten Ölschiefer und gemahlene Hochofenschlacke (Hüttensand) umfaßt, und daß die wenigstens eine aktivierte Siliziumdioxidkomponente aus einer zweiten Stoffgruppe ausgewählt ist, die pyrogene Kieselsäure, Fällungskieselsäure, Silicastaub, Glasmehl und Flug- oder Elektrofilterasche mit hohem Siliziumdioxidanteil umfaßt.

24. Beschichtung nach Anspruch 22 oder 23, **dadurch gekennzeichnet, daß** die Pulverkomponente zwischen 5 und 30 Gew.-% wenigstens einer aktivierten Aluminiumoxykomponente enthält.

25. Beschichtung nach Anspruch 24, **dadurch gekennzeichnet, daß** die wenigstens eine aktivierte Aluminiumoxykomponente ein Aluminiumoxid, Aluminiumhydroxid und/oder Aluminiumsilikat enthält.

26. Beschichtung nach einem der Ansprüche 22 oder 23, **dadurch gekennzeichnet, daß** die Pulverkomponente zusätzlich zwischen 1 und 10 Gew.-% eines hydraulischen Bindemittels, vorzugsweise Tonerdezement, enthält.

27. Beschichtung nach einem der Ansprüche 21 bis 26, **dadurch gekennzeichnet, daß** die Alkalisilikat-Bindemittelkomponente ein Alkaliwasserglas, vorzugsweise ein Kaliwasserglas ist.

28. Beschichtung nach einem der Ansprüche 22 bis 27, **dadurch gekennzeichnet, daß** die Pulverkomponente zwischen 40 und 60 Gew.-% einer inerten Komponente, vorzugsweise Quarzsand, enthält.

29. Beschichtung nach einem der Ansprüche 22 bis 28, **dadurch gekennzeichnet, daß** die Pulverkomponente wenigstens ein Additiv aus einer Additivgruppe enthält, wobei die Additivgruppe redispergierbare Polymerbindemittel, Schwindreduzierer, Fasern und Pigmente umfaßt.

30. Beschichtung nach einem der Ansprüche 19 bis 29, **dadurch gekennzeichnet, daß** die Glasfolien nebeneinander aufgelegte, einander überlappende Glasfolien-Bahnen oder -Platten (3A, 3B) sind.

31. Beschichtung nach Anspruch 30, **dadurch gekennzeichnet, daß** sich die Glasfolien-Bahnen oder -Platten (3A, 3B) in einem schmalen Bereich (4) einer Breite zwischen 0,3 cm und 7 cm, vorzugsweise zwischen 2 cm und 5 cm, überlappen.

32. Beschichtung nach Anspruch 30 oder 31, **dadurch gekennzeichnet, daß** die Glasfolien-Bahnen oder -Platten (3A, 3B) im Überlappungsbereich (4) miteinander verschweißt oder mit dem Polysilikat-Kohäsionsklebstoff verklebt sind.

33. Beschichtung nach einem der Ansprüche 20 bis 32, **dadurch gekennzeichnet, daß** die Glasfolien-Bahnen oder -Platten aus einem Borosilikatglas mit 2 bis 12 %, vorzugsweise 5 bis 10 % Boranteil bestehen.

34. Verwendung einer Beschichtung nach einem der Ansprüche 19 bis 33 zur Auskleidung von Wand- und Deckenbereichen abwassertechnischer Anlagen.

35. Verwendung einer Beschichtung nach einem der Ansprüche 19 bis 33 zur Auskleidung von Kaminen als Schutz gegen Versottung.

36. Verwendung einer Beschichtung nach einem der Ansprüche 19 bis 33 zur Auskleidung von Trinkwasserbehältnissen und -reservoirs.

37. Verwendung einer Beschichtung nach einem der Ansprüche 19 bis 33 zur Reparatur von Schad- oder Fehlstellen in einem mechanisch stabilen, insbesondere mineralischen und/oder metallischen Untergrund.

## Claims

1. A method of producing a protective coating on a mechanically stable, particularly mineral and/or metallic, substrate:
(a) an inorganic polysilicate cohesion adhesive is made available;
(b) a glass film material with a thickness smaller than 2 mm, preferably smaller than 0.3 mm, is made available);
(c) the polysilicate cohesion adhesive is applied to the substrate to be coated and/or to one side of the glass film material;
(d) the glass film material is applied to the substrate to be coated before setting of the polysilicate cohesion adhesive such that the glass film material covers the polysilicate silicate cohesion adhesive;
(e) the polysilicate cohesion adhesive sets to connect the glass film material to the substrate to be coated.

2. A method as claimed in claim 1, **characterised in that** the polysilicate cohesion adhesive is applied to the substrate to be coated and/or to the one side of the glass film material in a uniform distribution.

3. A method as claimed in claim 2, **characterised in that** the entire surface of the substrate to be coated and/or of the one side of the glass film material is coated with the polysilicate cohesion adhesive before the glass film material is applied to the substrate to be coated.

4. A method as claimed in one of claim 1 to 3, **characterised in that** the inorganic polysilicate cohesion adhesive is prepared by mixing an alkali silicate bonding agent component with a silicon dioxide-containing, alumo silicate powder component in the presence of water so that a pasty or liquid composition is produced.

5. A method as claimed in claim 4, **characterised in that** the powder component contains between 5 and 50% wt. of at least one pozzuolanic or latent hydraulic component and between 10 and 40% wt. of at least one activated silicon dioxide component.

6. A method as claimed in claim 5, **characterised in that** at least one pozzuolanic or latent hydraulic component is selected from a first group of substances, which includes fly ash, electrofilter ash, natural pozzuolana, trass, burnt oil shale and ground blast furnace slag (foundry sand), and that at least one activated silicon dioxide component is selected from a second group of substances, which includes pyrogenic silica, precipitated silica, silica dust, glass flour and fly ash or electrofilter ash with a high silicon dioxide content.

7. A method as claimed in claim 5 or 6, **characterised in that** the powder component further includes between 5 and 30 % wt. of at least one activated aluminium oxy component.

8. A method as claimed in claim 7, **characterised in that** the least one activated aluminium oxy component includes an aluminium oxide, hydroxide and/or silicate.

9. A method as claimed in one of claims 5 to 8, **characterised in that** the powder component additionally contains 1 - 10% wt. of a hydraulic bonding agent, preferably alumina cement.

10. A method as claimed in one of claims 4 to 9, **characterised in that** an aqueous alkali silicate solution is provided as the alkali silicate bonding agent component, which is mixed with the powder component.

11. A method as claimed in claim 10, **characterised in that** an alkali silicate solution with a solid material content of 40 to 50% is used and that the powder component is mixed with 5 - 10% wt., preferably 10 to 15% wt., alkali silicate solution.

12. A method as claimed in one of claims 4 to 9, **characterised in that** a pulverulent alkali silicate bonding agent component is provided, that the pulverulent alkali silicate bonding agent component is mixed with the powder component and that the pasty or liquid composition is produced by mixing water into the mixture of the pulverulent alkali silicate bonding agent and the powder component.

13. A method as claimed in one of claims 4 to 12, **characterised in that** a powder component is used, which contains 40 to 60% wt. of an inert component which preferably includes quartz sand.

14. A method as claimed in one of claims 1 to 13, **characterised in that** the glass film material is provided in the form of webs or plates, which are positioned so as to overlap another.

15. A method as claimed in claim 14, **characterised in that** the glass film webs or plates overlap in a narrow region with a breadth between 0.3 cm and 7 cm, preferably 2 to 5 cm.

16. A method as claimed in one of claims 1 to 15, **characterised in that** the glass film material consists of a borosilicate glass with a boron content of 2 to 12, preferably 5 to 10% wt.

17. A method as claimed in one of claims 1 to 16, **characterised in that** the glass film material is produced in a low-stress manner by means of a drawing process.

18. A method as claimed in one of claims 1 to 16, **characterised in that** the glass film material is produced in low-stress manner by means of a float process.

19. A protective coating for a mechanically stable, particularly mineral and/or metallic substrate, including:
- an inorganic polysilicate cohesion adhesive layer (2) in a substantially uniform distribution on the substrate and
- a coating of glass film material (3A, 3B) positioned on the polysilicate cohesion adhesive layer (2) before the setting thereof, with a thickness smaller than 2 mm, preferably smaller than 0.3 mm, which covers the polysilicate cohesion adhesive layer (2).

20. A coating as claimed in claim 19, **characterised in that** the polysilicate cohesion adhesive layer (2) is arranged over the entire area between the substrate and the lining of glass film material.

21. A coating as claimed in claim 19 or 20, **characterised in that** the inorganic polysilicate cohesion adhesive layer contains an alkali silicate bonding agent component and a silicon dioxide containing, alumino silicate powder component.

22. A coating as claimed in claim 21, **characterised in that** the powder component includes between 5 and 50% wt. of at least one pozzuolanic or latent hydraulic component and between 10 and 40% wt. of at least one activated silicon dioxide component.

23. A coating as claimed in claim 22, **characterised in that** at least one pozzuolanic or latent hydraulic component is selected from a further group of substances, which includes fly ash, natural pozzuolana, trass, burnt oil shale and ground blast furnace slag (foundry sand), and that at least one activated silicon dioxide component is selected from a second group of substances, which includes pyrogenic silica, precipitated silica, silica dust, glass flour and fly ash or electrofilter ash with a high silicon dioxide content.

24. A coating as claimed in claim 22 or 23, **characterised in that** the powder component includes between 5 and 30% wt. of at least one activated aluminium oxy component.

25. A coating as claimed in claim 24, **characterised in that** the least one activated aluminium oxy component includes an aluminium oxide, aluminium hydroxide and/aluminium silicate.

26. A coating is claimed one of claims 22 and 23, **characterised in that** the powder component additionally includes between 1 and 10% wt. of a hydraulic bonding agent, preferably alumina cement.

27. A coating as claimed in one of claims 21 to 26, **characterised in that** the alkali silicate bonding agent component is an alkali water glass, preferably a potassium water glass.

28. A coating as claimed in one of claims 22 to 27, **characterised in that** the powder component includes between 40 and 60% wt. of an inert component, preferably quartz sand.

29. A coating as claimed in one of claims 22 to 28, **characterised in that** the powder component includes at least one additive from a group of additives, the group of additives including redispersible polymer bonding agent, reducer, fibres and pigments.

30. A coating as claimed in one of claims 19 to 29, **characterised in that** the glass films are glass film webs or plates (3A, 3B) positioned next to one another and overlapping one another.

31. A coating as claimed in claim 30, **characterised in that** the glass film webs or plates (3A, 3B) overlap in a narrow region (4) with a breadth between 0.3 cm and 7 cm, preferably between 2 cm and 5 cm.

32. A coating as claimed in claim 30 or 31, **characterised in that** the glass film webs or plates (3A, 3B) are welded together or secured by adhesive with the polysilicate cohesion adhesive in the overlap region (4).

33. A coating as claimed in one of claims 20 to 32, **characterised in that** the glass film webs or plates consist of a borosilicate glass, with a boron content of 2 to 12%, preferably 5 to 10%.

34. The use of a coating as claimed in one of claims 19 to 33 for lining wall and ceiling regions of sewage installations

35. The use of a coating as claimed in one of claims 19 to 33 for lining chimneys as protection against sooting up.

36. The use of a coating as claimed in one of claims 19 to 33 for lining drinking water containers and reservoirs.

37. The use of a coating as claimed in one of claims 19 to 33 for the repair of damaged or defective areas in a mechanically stable, particularly mineral and/or metallic, substrate.

## Revendications

1. Procédé de réalisation d'un revêtement protecteur sur un substrat mécaniquement stable, en particulier minéral et/ou métallique, dans lequel:
a) on prépare une colle de cohésion inorganique du type polysilicate,
b) on prépare de la feuille de verre d'épaisseur inférieure à 2 mm, de préférence inférieure à 0,3 mm,
c) on applique la colle de cohésion du type polysilicate sur le substrat à revêtir et/ou sur une face de la feuille de verre,
d) avant le durcissement de la colle de cohésion du type polysilicate, on pose la feuille de verre sur le substrat à revêtir de façon telle que celle-ci couvre la colle de cohésion du type polysilicate, et
e) on durcit la colle de cohésion du type polysilicate et ce faisant unit la feuille de verre au substrat à revêtir.

2. Procédé selon la revendication 1, **caractérisé par le fait qu'**on applique la colle de cohésion du type polysilicate avec répartition uniforme sur le substrat à revêtir et/ou sur la face de la feuille de verre.

3. Procédé selon la revendication 2, **caractérisé par le fait qu'**on revêt le substrat à revêtir et/ou la face de la feuille de verre de la colle de cohésion du type polysilicate sur toute sa surface avant de poser la feuille de verre sur le substrat à revêtir.

4. Procédé selon l'une des revendications 1 à 3, **caractérisé par le fait qu'**on prépare la colle de cohésion inorganique du type polysilicate en mélangeant en présence d'eau un composant liant à base de silicate alcalin avec un composant poudre à base de silicate d'aluminium contenant du dioxyde de silicium, de sorte qu'on obtient une matière pâteuse ou liquide.

5. Procédé selon la revendication 4, **caractérisé par le fait que** le composant poudre contient entre 5 et 50 % en poids d'au moins un composant pouzzolanique ou hydraulique latent et entre 10 et 40 % en poids d'au moins un composant dioxyde de silicium activé.

6. Procédé selon la revendication 5, **caractérisé par le fait que** le ou les composants pouzzolaniques ou hydrauliques latents sont choisis dans un premier groupe de substances qui comprend la cendre volante, la cendre de filtre électrique, les pouzzolanes naturelles, le trass, le schiste bitumineux calciné et le laitier de haut fourneau broyé (sable de laitier), et que le ou les composants dioxyde de silicium activés sont choisis dans un deuxième groupe de substances qui comprend l'acide silicique pyrogène, l'acide silicique précipité, la poussière de silice, la poudre de verre et la cendre volante ou de filtre électrique à haute teneur en dioxyde de silicium.

7. Procédé selon l'une des revendications 5 et 6, **caractérisé par le fait que** le composant poudre contient en outre entre 5 et 30 % en poids d'au moins un composant aluminiumoxy activé.

8. Procédé selon la revendication 7, **caractérisé par le fait que** le ou les composants aluminiumoxy activés contiennent un oxyde, un hydroxyde et/ou un silicate d'aluminium.

9. Procédé selon l'une des revendications 5 à 8, **caractérisé par le fait que** le composant poudre contient en outre 1 à 10 % en poids d'un liant hydraulique, de préférence de ciment alumineux.

10. Procédé selon l'une des revendications 4 à 9, **caractérisé par le fait qu'**on prépare comme composant liant à base de silicate alcalin une solution aqueuse de silicate alcalin qu'on mélange avec le composant poudre.

11. Procédé selon la revendication 10, **caractérisé par le fait qu'**on utilise une solution de silicate alcalin ayant une teneur en matières solides de 40 à 50 % et qu'on mélange le composant poudre avec 5 à 50 % en poids, de préférence 10 à 15 % en poids, de solution de silicate alcalin.

12. Procédé selon l'une des revendications 4 à 9, **caractérisé par le fait qu'**on prépare un composant liant à base de silicate alcalin en poudre, qu'on mélange ce composant liant à base de silicate alcalin en poudre avec le composant poudre et qu'on élabore la matière pâteuse ou liquide en ajoutant de l'eau au mélange du composant liant à base de silicate alcalin en poudre et du composant poudre.

13. Procédé selon l'une des revendications 4 à 12, **caractérisé par le fait qu'**on utilise un composant poudre qui contient 40 à 60 % en poids d'un composant inerte qui présente de préférence du sable quartzeux.

14. Procédé selon l'une des revendications 1 à 13, **caractérisé par le fait qu'**on prépare la feuille de verre sous forme de bandes ou de plaques qu'on pose avec recouvrement mutuel.

15. Procédé selon la revendication 14, **caractérisé par le fait que** les bandes ou plaques de feuille de verre se recouvrent dans une zone étroite de largeur comprise entre 0,3 et 7 cm, de préférence de 2 à 5 cm.

16. Procédé selon l'une des revendications 1 à 15, **caractérisé par le fait que** la feuille de verre est constituée d'un verre de borosilicate ayant une teneur en bore de 2 à 12 %, de préférence de 5 à 10 %.

17. Procédé selon l'une des revendications 1 à 16, **caractérisé par le fait qu'**on fabrique la feuille de verre par un procédé d'étirage avec faibles contraintes.

18. Procédé selon l'une des revendications 1 à 16, **caractérisé par le fait qu'**on fabrique la feuille de verre par un procédé de flottage avec faibles contraintes.

19. Revêtement protecteur pour un substrat mécaniquement stable, en particulier minéral et/ou métallique, présentant :
une couche de colle de cohésion inorganique du type polysilicate (2) placée avec une répartition sensiblement uniforme sur le substrat, et
une garniture en feuille de verre (3A, 3B) d'épaisseur inférieure à 2 mm, de préférence inférieure à 0,3 mm, posée sur la couche de colle de cohésion du type polysilicate (2) avant le durcissement de celle-ci et couvrant celle-ci.

20. Revêtement selon la revendication 19, **caractérisé par le fait que** la couche de colle de cohésion du type polysilicate (2) est prévue sur toute la surface entre le substrat et la garniture en feuille de verre.

21. Revêtement selon l'une des revendications 19 et 20, **caractérisé par le fait que** la couche de colle de cohésion inorganique du type polysilicate contient un composant liant à base de silicate alcalin et un composant poudre à base de silicate d'aluminium contenant du dioxyde de silicium.

22. Revêtement selon la revendication 21, **caractérisé par le fait que** le composant poudre contient entre 5 et 50 % en poids d'au moins un composant pouzzolanique ou hydraulique latent et entre 10 et 40 % en poids d'au moins un composant dioxyde de silicium activé.

23. Revêtement selon la revendication 22, **caractérisé par le fait que** le ou les composants pouzzolaniques ou hydrauliques latents sont choisis dans un premier groupe de substances qui comprend la cendre volante, les pouzzolanes naturelles, le trass, le schiste bitumineux calciné et le laitier de haut fourneau broyé (sable de laitier), et que le ou les composants dioxyde de silicium activés sont choisis dans un deuxième groupe de substances qui comprend l'acide silicique pyrogène, l'acide silicique précipité, la poussière de silice, la poudre de verre et la cendre volante ou de filtre électrique à haute teneur en dioxyde de silicium.

24. Revêtement selon l'une des revendications 22 et 23, **caractérisé par le fait que** le composant poudre contient entre 5 et 30 % en poids d'au moins un composant aluminiumoxy activé.

25. Revêtement selon la revendication 24, **caractérisé par le fait que** le ou les composants aluminiumoxy activés contiennent un oxyde, un hydroxyde et/ou un silicate d'aluminium.

26. Revêtement selon l'une des revendications 22 et 23, **caractérisé par le fait que** le composant poudre contient en plus entre 1 et 10 % en poids d'un liant hydraulique, de préférence de ciment alumineux.

27. Revêtement selon l'une des revendications 21 à 26, **caractérisé par le fait que** le silicate alcalin du composant liant à base de silicate alcalin est de préférence un silicate de potassium.

28. Revêtement selon l'une des revendications 22 à 27, **caractérisé par le fait que** le composant poudre contient entre 40 et 60 % en poids d'un composant inerte, de préférence de sable quartzeux.

29. Revêtement selon l'une des revendications 22 à 28, **caractérisé par le fait que** le composant poudre contient au moins un additif d'un groupe d'additifs, ce groupe comprenant les liants polymères redispersibles, les réducteurs de retrait, les fibres et les pigments.

30. Revêtement selon l'une des revendications 19 à 29, **caractérisé par le fait que** les feuilles de verre sont des bandes ou des plaques posées côte à côte et se recouvrant (3A, 3B).

31. Revêtement selon la revendication 30, **caractérisé par le fait que** les bandes ou les plaques de feuille de verre (3A, 3B) se recouvrent dans une zone étroite (4) de largeur comprise entre 0,3 cm et 7 cm, de préférence entre 2 cm et 5 cm.

32. Revêtement selon l'une des revendications 30 et 31, **caractérisé par le fait que** les bandes ou les plaques de feuille de verre (3A, 3B) sont soudées entre elles ou collées par la colle de cohésion du type polysilicate dans la zone de recouvrement (4).

33. Revêtement selon l'une des revendications 20 à 32, **caractérisé par le fait que** les bandes ou les plaques de feuille de verre sont constituées d'un verre de borosilicate ayant une teneur en bore de 2 à 12 %, de préférence de 5 à 10%.

34. Utilisation d'un revêtement selon l'une des revendications 19 à 33 pour le revêtement de zones de murs et de plafonds d'installations d'eaux usées.

35. Utilisation d'un revêtement selon l'une des revendications 19 à 33 pour le revêtement de cheminées comme protection contre le dépôt de suie.

36. Utilisation d'un revêtement selon l'une des revendications 19 à 33 pour le revêtement de récipients et de réservoirs d'eau potable.

37. Utilisation d'un revêtement selon l'une des revendications 19 à 33 pour la réparation de dommages ou de défauts dans un substrat mécaniquement stable, en particulier minéral et/ou métallique.
